(19) Europäisches Patentamt European Patent Office Office européen des brevets

(11) **EP 4 181 020 A1**

(12) **EUROPEAN PATENT APPLICATION**
published in accordance with Art. 153(4) EPC

(43) Date of publication:
**17.05.2023 Bulletin 2023/20**

(21) Application number: **21849491.2**

(22) Date of filing: **13.07.2021**

(51) International Patent Classification (IPC):
**G06N 3/04** (2023.01)    **G06N 3/08** (2023.01)

(86) International application number:
**PCT/CN2021/105962**

(87) International publication number:
**WO 2022/022274 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2020 CN 202010762709**

(71) Applicant: **Huawei Technologies Co., Ltd.
Shenzhen, Guangdong 518129 (CN)**

(72) Inventors:
• **LIAO, Yi
Shenzhen, Guangdong 518129 (CN)**
• **JIANG, Xin
Shenzhen, Guangdong 518129 (CN)**
• **CHEN, Xiao
Shenzhen, Guangdong 518129 (CN)**
• **QIAN, Li
Shenzhen, Guangdong 518129 (CN)**
• **LIU, Qun
Shenzhen, Guangdong 518129 (CN)**

(74) Representative: **Gill Jennings & Every LLP
The Broadgate Tower
20 Primrose Street
London EC2A 2ES (GB)**

(54) **MODEL TRAINING METHOD AND APPARATUS**

(57) A model training method applied to the field of artificial intelligence is disclosed. The method includes: sending a first submodel to a first device (501), where the first submodel is obtained by compressing a to-be-trained model; receiving a first gradient sent by the first device (502), where the first gradient is obtained when the first device trains the first submodel; and performing model training on the to-be-trained model based on at least the first gradient, to obtain an updated to-be-trained model (503). In the method, a server compresses the to-be-trained model and delivers the to-be-trained model to a terminal device, so that the terminal device does not need to train a large model with a same scale as that of the server.

FIG. 5

## Description

This application claims priority to Chinese Patent Application No. 202010762709.0, filed with the China National Intellectual Property Administration on July 31, 2020 and entitled "MODEL TRAINING METHOD AND APPARATUS", which is incorporated herein by reference in its entirety.

## TECHNICAL FIELD

This application relates to the field of artificial intelligence, and in particular, to a model training method and apparatus.

## BACKGROUND

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perceiving, inference, and decision-making functions.

A federated learning (federated learning) system trains a machine learning model based on data generated through interaction between a large quantity of users and devices (for example, a smartphone) of the users, and does not need to extract data from the devices. For example, a subset of an online device is selected in each loop, and a current version of the machine learning model is sent to the selected devices. Each selected device is assigned a computing model update task based on data that is locally generated and locally stored. The model update is then sent back to a server, averaged, and applied to a model of the server, to generate a new version of the model for a next iteration of the user (for example, a next subset of the devices).

Federated learning includes two steps: model delivery and model upload. A central node delivers a model to a terminal device through a network. Each terminal device calculates a gradient of the model based on local data. Each distributed node encrypts the gradient and uploads the encrypted gradient to the central node. The central node summarizes gradients of distributed nodes of terminals, and updates a parameter of the model of the central node according to a parameter average algorithm.

The existing federated learning technology requires that models of the central node and distributed nodes are the same. However, in some scenarios, a terminal device such as a mobile phone cannot compute a large model with a same scale as that of the central node due to a limitation of a data processing capability.

## SUMMARY

According to a first aspect, this application provides a model training method. The method includes:

sending a first submodel to a first device, where the first submodel is obtained by compressing a to-be-trained model;
receiving a first gradient sent by the first device, where the first gradient is obtained when the first device trains the first submodel; and
performing model training on the to-be-trained model based on at least the first gradient, to obtain an updated to-be-trained model.

An embodiment of this application provides a model training method. The method includes: sending the first submodel to the first device, where the first submodel is obtained by compressing the to-be-trained model; receiving the first gradient sent by the first device, where the first gradient is obtained when the first device trains the first submodel; and performing model training on the to-be-trained model based on at least the first gradient, to obtain the updated to-be-trained model. According to the method, a server compresses the to-be-trained model and delivers the to-be-trained model to a terminal device, so that the terminal device does not need to train a large model with a same scale as that of the server.

In a possible implementation, a storage resource for storing the first submodel is less than a storage resource for storing the to-be-trained model.

In a possible implementation, a computing resource for running the first submodel is less than a computing resource for running the to-be-trained model.

In a possible implementation, the computing resource includes at least one of the following: a memory resource, a video random access memory resource, or a CPU resource.

In a possible implementation, the first submodel is obtained by performing at least one of the following processing manners on the to-be-trained model: pruning, knowledge distillation, or quantization.

In a possible implementation, the performing model training on the to-be-trained model based on at least the first gradient includes:

training the first submodel based on the first gradient, to obtain the updated first submodel; and
performing knowledge distillation on the to-be-trained model by using at least the updated first submodel as a teacher model and the to-be-trained model as a student model, to obtain the updated to-be-trained model.

In a possible implementation, the method further includes:

obtaining a data processing capability of the first device, where the data processing capability includes at least one of the following: an available storage resource or an available computing resource; and
obtaining, based on a first mapping relationship, the first submodel corresponding to the first device, where the first mapping relationship includes a correspondence between a data processing capability and a submodel, and in the first mapping relationship, the data processing capability of the first device corresponds to the first submodel.

In a possible implementation, the method further includes:

sending a second submodel to a second device, where the second submodel is obtained by compressing the to-be-trained model, and the second submodel is different from the first submodel; and
receiving a second gradient sent by the second device, where the second gradient is obtained when the second device trains the second submodel; and
the performing model training on the to-be-trained model based on at least the first gradient includes:
performing model training on the to-be-trained model based on the first gradient and the second gradient, to obtain the updated to-be-trained model.

In a possible implementation, the data processing capability of the first device is different from a data processing capability of the second device, and the data processing capability includes at least one of the following: an available storage resource or an available computing resource.

In a possible implementation, the storage resource for storing the first submodel is different from a storage resource for storing the second submodel.

In a possible implementation, the computing resource for running the first submodel is different from a computing resource for running the second submodel.

In a possible implementation, the second submodel is obtained by performing at least one of the following processing manners on the to-be-trained model: pruning, knowledge distillation, or quantization.

In a possible implementation, the performing model training on the to-be-trained model based on the first gradient and the second gradient includes:

training the first submodel based on the first gradient, to obtain the updated first submodel;
training the second submodel based on the second gradient, to obtain an updated second submodel; and
performing knowledge distillation on the to-be-trained model by using the updated first submodel and the updated second submodel as teacher models and the to-be-trained model as a student model, to obtain the updated to-be-trained model.

According to a second aspect, this application provides a model training apparatus. The apparatus includes:

a sending module, configured to send a first submodel to a first device, where the first submodel is obtained by compressing a to-be-trained model;
a receiving module, configured to receive a first gradient sent by the first device, where the first gradient is obtained when the first device trains the first submodel; and
a model training module, configured to perform model training on the to-be-trained model based on at least the first gradient, to obtain an updated to-be-trained model.

In a possible implementation, a storage resource for storing the first submodel is less than a storage resource for storing the to-be-trained model.

In a possible implementation, a computing resource for running the first submodel is less than a computing resource for running the to-be-trained model.

In a possible implementation, the computing resource includes at least one of the following: a memory resource, a video random access memory resource, or a CPU resource.

In a possible implementation, the first submodel is obtained by performing at least one of the following processing manners on the to-be-trained model: pruning, knowledge distillation, or quantization.

In a possible implementation, the model training module is configured to: train the first submodel based on the first gradient, to obtain an updated first submodel; and perform knowledge distillation on the to-be-trained model by using at least the updated first submodel as a teacher model and the to-be-trained model as a student model, to obtain the updated to-be-trained model.

In a possible implementation, the apparatus further includes:

an obtaining module, configured to: obtain a data processing capability of the first device, where the data processing capability includes at least one of the following: an available storage resource or an available computing resource; and obtain, based on a first mapping relationship, the first submodel corresponding to the first device, where the first mapping relationship includes a correspondence between a data processing capability and a submodel, and in the first mapping relationship, the data processing capability of the first device corresponds to the first submodel.

In a possible implementation, the sending module is configured to send a second submodel to a second device, where the second submodel is obtained by compressing the to-be-trained model, and the second submodel is different from the first submodel.

The receiving module is configured to receive a second gradient sent by the second device, where the second gradient is obtained when the second device trains the second submodel.

The model training module is configured to perform model training on the to-be-trained model based on the first gradient and the second gradient, to obtain the updated to-be-trained model.

In a possible implementation, the data processing capability of the first device is different from a data processing capability of the second device, and the data processing capability includes at least one of the following: an available storage resource or an available computing resource.

In a possible implementation, the storage resource for storing the first submodel is different from a storage resource for storing the second submodel.

In a possible implementation, the computing resource for running the first submodel is different from a computing resource for running the second submodel.

In a possible implementation, the second submodel is obtained by performing at least one of the following processing manners on the to-be-trained model: pruning, knowledge distillation, or quantization.

In a possible implementation, the model training module is configured to: train the first submodel based on the first gradient, to obtain the updated first submodel; train the second submodel based on the second gradient, to obtain an updated second submodel; and perform knowledge distillation on the to-be-trained model by using the updated first submodel and the updated second submodel as teacher models and the to-be-trained model as a student model, to obtain the updated to-be-trained model.

According to a third aspect, this application provides a system, including a first device and a server.

The server is configured to send a first submodel to the first device, where the first submodel is obtained by compressing a to-be-trained model.

The first device is configured to: train the first submodel, to obtain a first gradient; and send the first gradient to the server.

The server is configured to perform model training on the to-be-trained model based on at least the first gradient, to obtain an updated to-be-trained model.

In a possible implementation, a storage resource for storing the first submodel is less than a storage resource for storing the to-be-trained model.

In a possible implementation, a computing resource for running the first submodel is less than a computing resource for running the to-be-trained model.

In a possible implementation, the computing resource includes at least one of the following: a memory resource, a video random access memory resource, or a CPU resource.

In a possible implementation, the first submodel is obtained by performing at least one of the following processing manners on the to-be-trained model: pruning, knowledge distillation, or quantization.

In a possible implementation, the server is configured to: train the first submodel based on the first gradient, to obtain the updated first submodel; and perform knowledge distillation on the to-be-trained model by using at least the updated first submodel as a teacher model and the to-be-trained model as a student model, to obtain the updated to-be-trained model.

In a possible implementation, the server is configured to: obtain a data processing capability of the first device, where the data processing capability includes at least one of the following: an available storage resource or an available computing resource; and

obtain, based on a first mapping relationship, the first submodel corresponding to the first device, where the first mapping relationship includes a correspondence between a data processing capability and a submodel, and in the first mapping relationship, the data processing capability of the first device corresponds to the first submodel.

In a possible implementation, the system further includes a second device. The server is configured to send a second submodel to the second device, where the second submodel is obtained by compressing the to-be-trained model, and the second submodel is different from the first submodel.

The second device is configured to: train the second submodel to obtain a second gradient; and send the second gradient to the server.

That the server is configured to perform model training on the to-be-trained model based on at least the first gradient includes:

performing model training on the to-be-trained model based on the first gradient and the second gradient, to obtain the updated to-be-trained model.

In a possible implementation, the data processing capability of the first device is different from a data processing capability of the second device, and the data processing capability includes at least one of the following: an available storage resource or an available computing resource.

In a possible implementation, the storage resource for storing the first submodel is different from a storage resource for storing the second submodel.

In a possible implementation, the computing resource for running the first submodel is different from a computing resource for running the second submodel.

In a possible implementation, the second submodel is obtained by performing at least one of the following processing manners on the to-be-trained model: pruning, knowledge distillation, or quantization.

In a possible implementation, the server is configured to: train the first submodel based on the first gradient, to obtain the updated first submodel;

train the second submodel based on the second gradient, to obtain an updated second submodel; and
perform knowledge distillation on the to-be-trained model by using the updated first submodel and the updated second submodel as teacher models and the to-be-trained model as a student model, to obtain the updated to-be-trained model.

According to a fourth aspect, an embodiment of this application provides a data processing apparatus, including a memory, a processor, and a bus system. The memory is configured to store a program, and the processor is configured to execute the program in the memory, to perform the method in any one of the first aspect and the optional implementations of the first aspect.

According to a fifth aspect, an embodiment of this application provides a computer-readable storage medium. The computer-readable storage medium stores a computer program, and when the computer program is run on a computer, the computer is enabled to perform the method in any one of the first aspect and the optional implementations of the first aspect.

According to a sixth aspect, an embodiment of this application provides a computer program. When the computer program is run on a computer, the computer is enabled to perform the method in any one of the first aspect and the optional implementations of the first aspect.

According to a seventh aspect, this application provides a chip system. The chip system includes a processor, configured to support an execution device to implement functions in the foregoing aspects, for example, sending or processing data or information in the foregoing method. In a possible design, the chip system further includes a memory. The memory is configured to store program instructions and data that are necessary for the execution device or a training device. The chip system may include a chip, or may include a chip and another discrete component.

An embodiment of this application provides a model training method. The method includes: sending a first submodel to a first device, where the first submodel is obtained by compressing a to-be-trained model; receiving a first gradient sent by the first device, where the first gradient is obtained when the first device trains the first submodel; and performing model training on the to-be-trained model based on at least the first gradient, to obtain an updated to-be-trained model. According to the method, a server compresses the to-be-trained model and delivers the to-be-trained model to a terminal device, so that the terminal device does not need to train a large model with a same scale as that of the server.

## DESCRIPTION OF DRAWINGS

FIG. 1 is a schematic diagram of a structure of an artificial intelligence main framework;

FIG. 2 is a schematic diagram of a computing system for model training according to an embodiment of this application;

FIG. 3 is a schematic diagram of a system architecture according to an embodiment of this application;

FIG. 4 is a schematic diagram of an architecture of a model training method according to an embodiment of this application;

FIG. 5 is a schematic flowchart of a model training method according to an embodiment of this application;

FIG. 6 and FIG. 7 are examples of a model training method according to an embodiment of this application;

FIG. 8 is a schematic diagram of a data processing apparatus according to an embodiment of this application;

FIG. 9 is a schematic diagram of a system according to an embodiment of this application;

FIG. 10 is a schematic diagram of a structure of an execution device according to an embodiment of this application;

FIG. 11 is a schematic diagram of a structure of a training device according to an embodiment of this application; and

FIG. 12 is a schematic diagram of a structure of a chip according to an embodiment of this application.

## DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that as a technology evolves and a new scenario emerges, technical solutions provided in embodiments of this application are also applicable to a similar technical problem.

In the specification, claims, and the accompanying drawings of this application, terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include", "contain" and any other variants mean to cover the non-exclusive inclusion, so that a process, method, system, product, or device that includes a series of units is not limited to those units, but may include other units not expressly listed or inherent to such a process, method, system, product, or device.

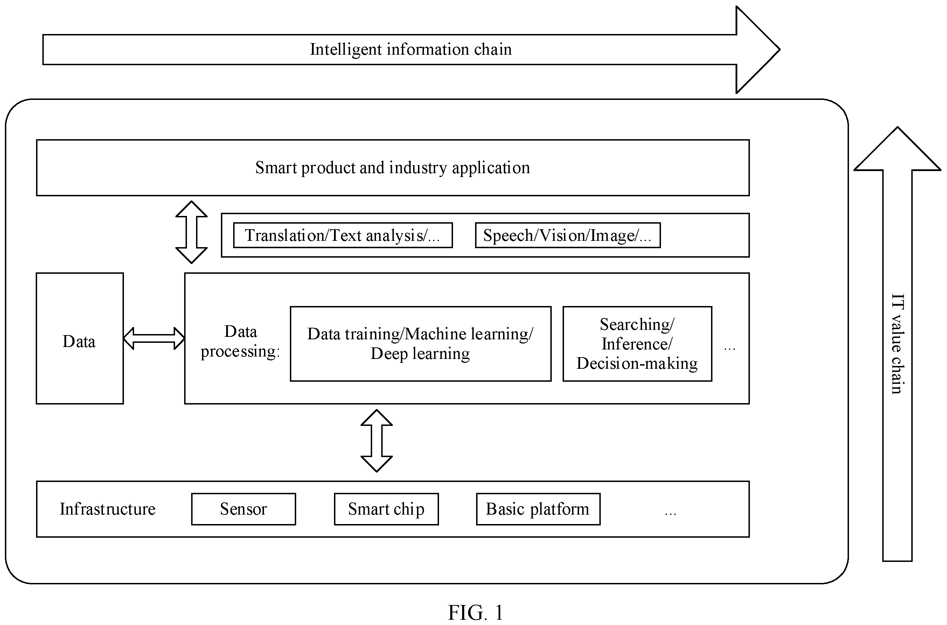

An overall working procedure of an artificial intelligence system is first described. Refer to FIG. 1. FIG. 1 shows a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In these processes, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by a smart chip (a hardware acceleration chip such as a CPU, an NPU, a GPU, an ASIC, or an FPGA). The basic platform of the infrastructure includes related platforms, for example, a distributed computing framework and a network, for assurance and support, including cloud storage and computing, an interconnection network, and the like. For example, the sensor communicates with the outside to obtain data, and the data is provided to a smart chip in a distributed computing system provided by the basic platform for computing.

(2) Data

Data at an upper layer of the infrastructure is used to indicate a data source in the field of artificial intelligence. The data relates to a graph, an image, speech, and text, further relates to Internet of things data of a conventional device, and includes service data of an existing system and perception data such as force, displacement, a liquid level, a temperature, and humidity.

(3) Data processing

Data processing usually includes a manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inferring manner is simulated in a computer or an intelligent system, and machine thinking and problem resolving are performed by using formal information according to an inferring control policy. A typical function is searching and matching.

Decision-making is a process in which a decision is made after intelligent information is inferred, and usually provides functions such as classification, ranking, and prediction.

(4) General capability

After data processing mentioned above is performed on data, some general capabilities may further be formed based on a data processing result, for example, an algorithm or a general system, such as translation, text analysis, computer vision processing, speech recognition, and image recognition.

(5) Smart product and industry application

The smart product and the industry application are a product and an application of the artificial intelligence system in various fields, and are package of an overall solution of the artificial intelligence, so that decision-making for intelligent information is productized and an application is implemented. Application fields mainly include a smart terminal, smart transportation, smart health care, autonomous driving, a safe city, and the like.

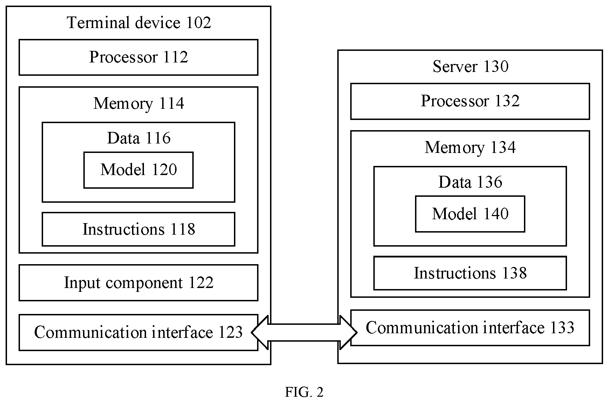

FIG. 2 is a schematic diagram of a computing system for model training according to an embodiment of this application. The computing system includes a terminal device 102 (which may be referred to as a first device and a second device in the following) and a server 130 (which may also be referred to as a central node) that are communicatively coupled through a network. The terminal device 102 may be any type of computing device, for example, a personal computing device (for example, a laptop computer or a desktop computer), a mobile computing device (for example, a smartphone or a tablet), a game console or controller, a wearable computing device, an embedded computing device, or another type of computing device.

The terminal device 102 may include a processor 112 and a memory 114. The processor 112 may be any suitable processing device (for example, a processor core, a microprocessor, an application-specific integrated circuit (application-specific integrated circuit, ASIC), a field programmable gate array (field programmable gate array, FPGA), a controller, a microcontroller, or the like). The memory 114 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like. The memory 114 may store data 116 and instructions 118 that are executed by the processor 112, so that the terminal device 102 performs an operation.

In some embodiments, the memory 114 may store one or more models 120. For example, the model 120 may be or may additionally include various machine learning models, for example, a neural network (for example, a deep neural network) or another type of machine learning model, including a nonlinear model and/or a linear model. The neural network may include a feedforward neural network, a recurrent neural network (for example, a long short-term memory recurrent neural network), a convolutional neural network, or a neural network in another form.

In some implementations, the one or more models 120 may be received through a network from the server 130, stored in the memory 114, and then used or implemented by one or more processors 112.

The terminal device 102 may further include one or more user input components 122 that receive a user input. For example, the user input component 122 may be a touch-sensitive component (for example, a touch-sensitive display or a touchpad) that is sensitive to a touch of a user input object (for example, a finger or a stylus). The touch-sensitive component may be configured to implement a virtual keyboard. For another example, the user input component includes a microphone, a conventional keyboard, or another device through which a user can provide a user input.

The terminal device 102 may further include a communication interface 123, and the terminal device 102 may be communicatively connected to the server 130 through the communication interface 123. The server 130 may include a communication interface 133, and the terminal device 102 may be communicatively connected to the communication interface 133 of the server 130 through the communication interface 123, to implement data exchange between the terminal device 102 and the server 130.

The server 130 may include a processor 132 and a memory 134. The processor 132 may be any suitable processing device (for example, a processor core, a microprocessor, an application-specific integrated circuit (application-specific integrated circuit, ASIC), a field programmable gate array (field programmable gate array, FPGA), a controller, a microcontroller, or the like). The memory 134 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like. The memory 134 may store data 136 and instructions 138 that are executed by the processor 132, so that the server 130 performs an operation.

As described above, the memory 134 may store one or more machine learning models 140. For example, the model 140 may be or may additionally include various machine learning models. For example, the machine learning model includes a neural network or another multi-layer nonlinear model. For example, the neural network includes a feedforward neural network, a deep neural network, a recurrent neural network, and a convolutional neural network.

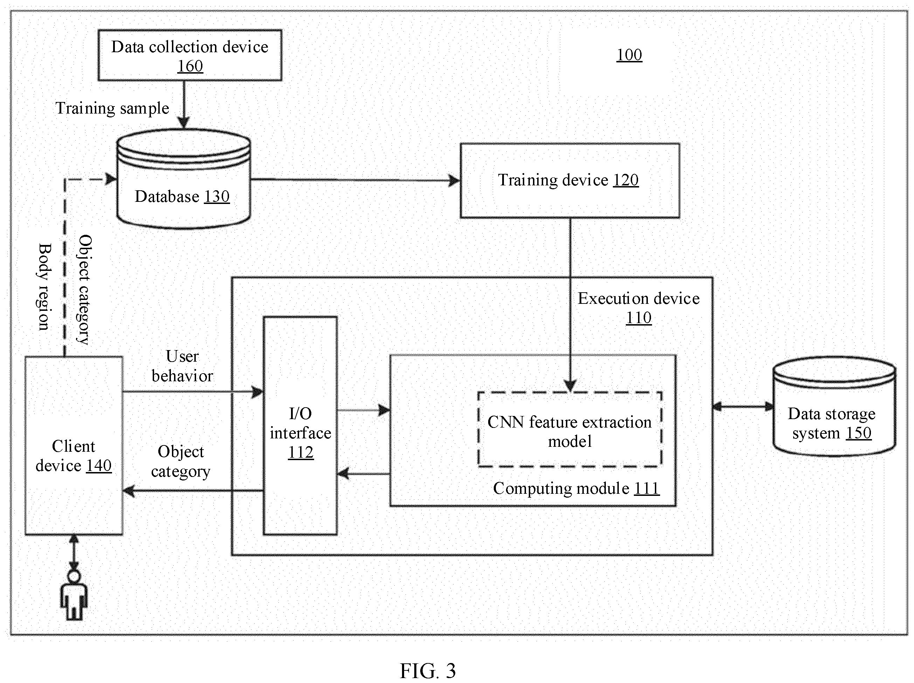

FIG. 3 is a schematic diagram of an architecture of a system 100 according to an embodiment of this application. In FIG. 3, an execution device 110 configures an input/output (input/output, I/O) interface 112, configured to exchange data with an external device. A user may input data to the I/O interface 112 by using a client device 140. The input data in this embodiment of this application may include each to-be-scheduled task, a resource that can be invoked, and another parameter.

In a process in which the execution device 110 preprocesses the input data, or in a process in which a computing module 111 of the execution device 110 performs computing (for example, implementing a function of a neural network in this application), the execution device 110 may invoke data, code, and the like in a data storage system 150 for corresponding processing, and may further store, in the data storage system 150, data, an instruction, and the like that are obtained through the corresponding processing.

Finally, the I/O interface 112 returns a processing result to the client device 140, and provides the processing result to the user.

It should be noted that a training device 120 may generate corresponding target models/rules for different targets or different tasks based on different training data. The corresponding target models/rules may be used to implement the foregoing targets or complete the foregoing tasks, to provide a required result for the user.

In a case shown in FIG. 3, the user may manually input data and the user may input the data on an interface provided by the I/O interface 112. In another case, the client device 140 may automatically send input data to the I/O interface 112. If it is required that the client device 140 needs to obtain authorization from the user to automatically send the input data, the user may set corresponding permission on the client device 140. The user may view, on the client device 140, a result output by the execution device 110. Specifically, the result may be presented in a form of displaying, a sound, an action, or the like. The client device 140 may alternatively be used as a data collection end, to collect, as new sample data, input data that is input to the I/O interface 112 and an output result that is output from the I/O interface 112 that are shown in the figure, and store the new sample data in a database 130. It is clear that the client device 140 may alternatively not perform collection. Instead, the I/O interface 112 directly stores, in the database 130 as new sample data, the input data input to the I/O interface 112 and the output result output from the I/O interface 112.

It should be noted that FIG. 3 is merely a schematic diagram of the system architecture according to an embodiment of this application. A location relationship between a device, a component, a module, and the like shown in the figure constitutes no limitation. For example, in FIG. 3, the data storage system 150 is an external memory relative to the execution device 110. In another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete computing work of the computing module 111. The chip may alternatively be disposed in the training device 120 shown in FIG. 3, to complete training work of the training device 120 and output the target model/rule.

The neural network processing unit NPU serves as a coprocessor, and may be disposed on a host central processing unit (central processing unit, CPU) (host CPU). The host CPU assigns a task. A core part of the NPU is an operation circuit, and a controller controls the operation circuit to extract data in a memory (a weight memory or an input memory) and perform an operation.

In some implementations, the operation circuit includes a plurality of processing engines (process engine, PE) inside. In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, it is assumed that there are an input matrix A, a weight matrix B, and an output matrix C. The operation circuit fetches, from a weight memory, data corresponding to the matrix B, and caches the data on each PE in the operation circuit. The operation circuit fetches data of the matrix A from an input memory, to perform a matrix operation on the matrix B, and stores an obtained partial result or an obtained final result of the matrix in an accumulator (accumulator).

A vector calculation unit may perform further processing such as vector multiplication, vector addition, an exponent operation, a logarithm operation, or value comparison on an output of the operation circuit. For example, the vector calculation unit may be configured to perform network calculation, such as pooling (pooling), batch normalization (batch normalization), or local response normalization (local response normalization) at a non-convolutional/non-FC layer in a neural network.

In some implementations, the vector calculation unit can store a processed output vector in a unified cache. For example, the vector calculation unit may apply a nonlinear function to an output, for example, a vector of an accumulated value, of the operation circuit to generate an activation value. In some implementations, the vector calculation unit generates a normalized value, a combined value, or both a normalized value and a combined value. In some implementations, the processed output vector can be used as an activated input to the operation circuit, for example, the processed output vector can be used at a subsequent layer of the neural network.

A unified memory is configured to store input data and output data.

For weight data, a direct memory access controller (direct memory access controller, DMAC) directly transfers input data in an external memory to the input memory and/or the unified memory, stores weight data in the external memory in the weight memory, and stores data in the unified memory in the external memory.

A bus interface unit (bus interface unit, BIU) is configured to implement interaction between the host CPU, the DMAC, and an instruction fetch buffer by using a bus.

The instruction fetch buffer (instruction fetch buffer) connected to the controller is configured to store instructions used by the controller.

The controller is configured to invoke the instructions cached in the instruction fetch buffer, to implement a working process of controlling an operation accelerator.

Usually, the unified memory, the input memory, the weight memory, and the instruction fetch buffer may all be on-chip (on-chip) memories. The external memory may be a memory outside the NPU, and the external memory may be a double data rate synchronous dynamic random access memory (double data rate synchronous dynamic random access memory, DDR SDRAM), a high bandwidth memory (high bandwidth memory, HBM), or another readable and writable memory.

Because embodiments of this application relate to massive application of a neural network, for ease of understanding, the following first describes terms and concepts related to the neural network in embodiments of this application.

(1) Neural network

The neural network may include a neuron. The neuron may be an operation unit that uses xs and an intercept of 1 as an input. An output of the operation unit may be as follows:

$$h_{W,b}\left(x\right) = f\left(W^T x\right) = f(\sum\nolimits_{s=1}^{n} W_s x_s + b) \quad (1\text{-}1)$$

s = 1, 2, ..., or n, n is a natural number greater than 1, $W_s$ is a weight of $x_s$, and b is bias of the neuron. f is an activation function (activation function) of the neuron, used to introduce a nonlinear feature into the neural network, to convert an input signal in the neuron into an output signal. The output signal of the activation function may serve as an input of a next convolution layer. The activation function may be a sigmoid function. The neural network is a network constituted by connecting a plurality of single neurons together. To be specific, an output of a neuron may be an input to another neuron. An input of each neuron may be connected to a local receptive field of a previous layer to extract a feature of the local receptive field. The local receptive field may be a region including several neurons.

Work at each layer of the neural network may be described by using a mathematical expression $\vec{y} = a(W\vec{x} + b)$. From a physical layer, work at each layer of the neural network may be understood as completing transformation from input space to output space (namely, from row space to column space of a matrix) by performing five operations on the input space (a set of input vectors). The five operations are as follows: 1. dimension increasing/dimension reduction; 2. scaling up/scaling down; 3. rotation; 4. translation; and 5. "bending". The operation 1, the operation 2, and the operation 3 are performed by $W\vec{x}$, the operation 4 is performed by $+b$, and the operation 5 is performed by $a()$. The word "space" is used herein for expression because a classified object is not a single thing, but a type of things. Space is a collection of all individuals of such type of things. $W$ is a weight vector, and each value in the vector indicates a weight value of one neuron in the neural network at this layer. The vector $W$ determines space transformation from the input space to the output space described above. In other words, a weight $W$ at each layer controls how to transform space. A purpose of training the neural network is to finally obtain a weight matrix (a weight matrix formed by vectors $W$ at a plurality of layers) at all layers of a trained neural network. Therefore, the training process of the neural network is essentially a manner of learning control of space transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, the difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

A neural network may use an error back propagation (back propagation, BP) algorithm to correct a value of a parameter in an initial neural network model in a training process, so that a reconstruction error loss of the neural network model becomes smaller. Specifically, an input signal is transferred forward until an error loss occurs at an output, and the parameter in the initial neural network model is updated based on back propagation error loss information, to make the error loss converge. The back propagation algorithm is an error-loss-centered back propagation motion intended to obtain a parameter, such as a weight matrix, of an optimal neural network model.

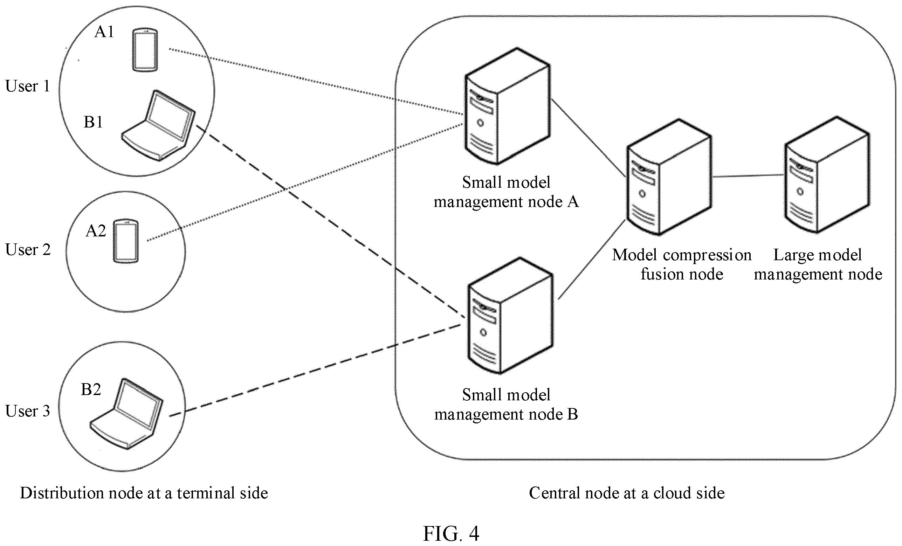

FIG. 4 is a schematic diagram of an architecture of a model training method according to an embodiment of this application. As shown in FIG. 4, the architecture provided in this embodiment of this application includes a central node on a cloud side, for example, a server on a cloud side. A1, A2, ... are distributed nodes with a type of A, for example, a mobile phone product held by a user. B1, B2, ... are distributed nodes with a type of B, for example, a personal computer held by the user. After consent of an administrator (for example, the user of the mobile phone or the computer) of the distributed node, the administrator of the distributed node voluntarily shares data generated in daily usage of the device when privacy is protected, and the data is added to a model training plan. The device becomes a distributed node in the architecture. The system in this embodiment may also include more types of distributed nodes, for example, a smartwatch. To protect data privacy, the distributed node does not upload data to the central node, and stores data locally. The distributed node is connected to the cloud server through a communication network. The central node on the cloud side can run a large model, but each distributed node can run only a small model due to a hardware capability. In addition, A and B can have different data processing capabilities.

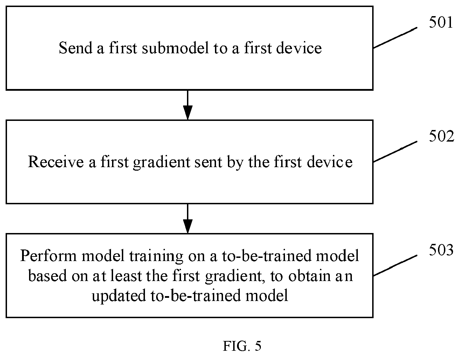

FIG. 5 is a schematic flowchart of a model training method according to an embodiment of this application. As shown in FIG. 5, the model training method provided in this embodiment of this application includes the following steps.

501: A server sends a first submodel to a first device, where the first submodel is obtained by compressing a to-be-trained model.

In this embodiment of this application, the server (which may also be referred to as a central node or a training device on a cloud side) may send the first submodel to the first device, where the first submodel is obtained by compressing the to-be-trained model. The first device may be a terminal device, for example, the distributed node (A1, A2, B1, or B2) shown in FIG. 4.

In this embodiment of this application, the server may obtain the to-be-trained model. The to-be-trained model may be a model training object of subsequent federated learning. The to-be-trained model may include a neural network or another multi-layer nonlinear model. For example, the neural network may include a feedforward neural network, a deep neural network, a recurrent neural network, and a convolutional neural network.

In this embodiment of this application, the server may compress the to-be-trained model, to obtain the first submodel. Specifically, the first submodel may be obtained by performing at least one of the following processing manners on the to-be-trained model: pruning, knowledge distillation, or quantization. In a weight matrix of the neural network, a pruning operation is setting some elements to invalid values. In one implementation, an element that needs to be pruned may be set to 0. For example, a weight value whose absolute value is less than or equal to a specific threshold in the weight matrix is set to 0. For knowledge distillation and quantification, knowledge distillation and quantification methods provided in the conventional technology can be used.

The first submodel and the to-be-trained model may meet at least one of the following features: a storage resource for storing the first submodel is less than a storage resource for storing the to-be-trained model, and a computing resource for running the first submodel is less than a computing resource for running the to-be-trained model. The computing resource may include at least one of the following: a memory resource, a video random access memory resource, or a CPU resource.

In an implementation, a storage resource for storing the first submodel is less than a storage resource for storing the to-be-trained model. The storage resource may be understood as a size of storage space. For example, the terminal device needs storage space of 200 MB to store the first submodel, and storage space of 1 GB to store the to-be-trained model.

In an implementation, a computing resource for running the first submodel is less than a computing resource for running the to-be-trained model. The computing resource may include at least one of the following: a memory resource, a video random access memory resource, or a CPU resource. It should be noted that the required computing resource may be a peak computing resource for running the model, for example, peak memory usage, peak video random access memory usage, or peak CPU usage.

In this embodiment of this application, the server may select the first submodel based on a data processing capability of the first device, so that the first device has sufficient resources to run the first submodel. In an implementation, the server may obtain the data processing capability of the first device, where the data processing capability includes at least one of the following: an available storage resource or an available computing resource; and obtain, based on a first mapping relationship, the first submodel corresponding to the first device, where the first mapping relationship includes a correspondence between a data processing capability and a submodel, and in the first mapping relationship, the data processing capability of the first device corresponds to the first submodel.

In an implementation, the data processing capability of the first device may be related to the available computing resource. In an implementation, the data processing capability of the first device may be related to the available computing resource. In an implementation, the data processing capability of the first device may be related to the available computing resource and the available computing resource.

Specifically, the data processing capability of the first device may be a parameter value, and the parameter value may indicate the data processing capability of the device. In an implementation, the terminal device may determine the data processing capability of the first device based on hardware capability information such as models of a system on chip (system on chip, SoC), a graphics processing unit (graphics processing unit, GPU), and an embedded neural network processing unit (neural network processing unit, NPU) of the first device, and a size of the storage space. Optionally, the server may maintain a calculation function of a data processing capability. An input is the SoC model, the GPU model, the NPU model, the size of the storage space, and the like, and an output is a data processing capability obtained through calculation.

In this embodiment of this application, the server may obtain, based on the first mapping relationship, the first submodel corresponding to the first device. The first mapping relationship may be a data processing capability range-model mapping table, and each data processing capability range corresponds to one model. For example, the data processing capability range is 0 to 100 points, data processing capability ranges are 0 to 10, 10 to 20, 20 to 30, ..., and 90 to 100, and each range is mapped to a model. In this embodiment of this application, the server may obtain the data processing capability of the first device, and determine, based on the first mapping relationship, a range in which the data processing capability of the first device falls, where the range in which the data processing capability of the first device falls corresponds to the first submodel.

It should be understood that the hardware capability information, for example, the SoC model, the GPU model, the NPU model, and the size of the storage space, related to the first device may be uploaded by the first device to the server. Optionally, the first device may send a device registration request carrying the hardware capability information to the server.

Similarly, the server may further send a second submodel to a second device, where the second submodel is obtained by compressing the to-be-trained model, and the second submodel is different from the first submodel. Specifically, the storage resource for storing the first submodel is different from a storage resource for storing the second submodel, and/or the computing resource for running the first submodel is different from a computing resource for running the second submodel. The second submodel is obtained by performing at least one of the following processing manners on the to-be-trained model: pruning, knowledge distillation, or quantization.

In this embodiment of this application, the server may deliver different models for devices with different data processing capabilities. For example, the data processing capability of the first device is different from a data processing capability of the second device, and the data processing capability includes at least one of the following: an available storage resource or an available computing resource. Correspondingly, the server may deliver the first submodel to the first device, and deliver the second submodel to the second device, where the second submodel is different from the first submodel. For example, the storage resource for storing the first submodel is different from the storage resource for storing the second submodel, and/or the computing resource for running the first submodel is different from the computing resource for running the second submodel.

Then, the following provides an application example in which the server delivers a model to the terminal device.

First, a user voluntarily registers a terminal device held by the user with a training framework of a large-scale pre-trained language model. The user is informed of impact of the training on daily usage of the device, and a user data privacy protection policy needs to be strictly complied with during training. The user may select, from the device of the user, data that can be used in a training plan, for example, specify that text data generated when the user uses some specific applications (for example, Weibo) can be used in the training plan. The terminal device on the user side (for example, the first device and the second device in the foregoing embodiment) may send a device registration request carrying hardware capability information (for example, the hardware capability information such as the SoC model, the GPU model, the NPU model, and the size of the storage space in the foregoing embodiment) to the server. Optionally, if one user holds a plurality of personal devices, and data is shared between the plurality of personal devices, the user may register only one device as a distributed node. The server may obtain the hardware capability information of the terminal device, and map the terminal device to a specific group based on the hardware capability information of the terminal device. Different terminal groups correspond to different terminal hardware capabilities, and each group corresponds to one compressed model (for example, in the foregoing embodiment, the first device corresponds to the first submodel, and the second device corresponds to the second submodel). Specifically, the server may establish an association relationship between an ID of the terminal device and an ID of the corresponding group (for example, the association relationship between the ID of the terminal device and the ID of the corresponding group is established in the first mapping relationship in the foregoing embodiment).

After the user generates sufficient data for training during daily usage of the terminal device, the terminal device sends a model download request (carrying the ID of the terminal device) to the server on the cloud side, and the server on the cloud side obtains the ID of the corresponding group through indexing based on the ID of the terminal device. The server may send a model corresponding to the ID of the group to the terminal device through the network. For example, the server may distribute, to the terminal device through the network, a compression model TinyBERT that provides a specific size for an original model BERT stored in a central server.

502: Receive a first gradient sent by the first device, where the first gradient is obtained when the first device trains the first submodel.

In this embodiment of this application, after receiving the first submodel sent by the server, the first device may train the first submodel based on local data, obtain the first gradient during training, and then upload the first gradient to the server. Optionally, the first device may upload an encrypted first gradient to the server, to protect information privacy during transmission.

Similarly, after receiving the second submodel sent by the server, the second device may train the second submodel based on local data, obtain a second gradient during training, and then upload the second gradient to the server. Optionally, the second device may upload an encrypted second gradient to the server, to protect information privacy during transmission.

In this embodiment of this application, the server may receive the first gradient sent by the first device. Similarly, the server may further receive the second gradient sent by the second device.

503: Perform model training on the to-be-trained model based on at least the first gradient, to obtain an updated to-be-trained model.

In this embodiment of this application, the server may perform model training on the to-be-trained model based on at least the first gradient, to obtain the updated to-be-trained model. Specifically, the server may train the first submodel based on the first gradient, to obtain an updated first submodel; and perform knowledge distillation on the to-be-trained model by using at least the updated first submodel as a teacher model and the to-be-trained model as a student model, to obtain the updated to-be-trained model.

In this embodiment of this application the server may further train the second submodel based on the second gradient, to obtain an updated second submodel; and perform knowledge distillation on the to-be-trained model by using the updated first submodel and the updated second submodel as teacher models and the to-be-trained model as a student model, to obtain the updated to-be-trained model.

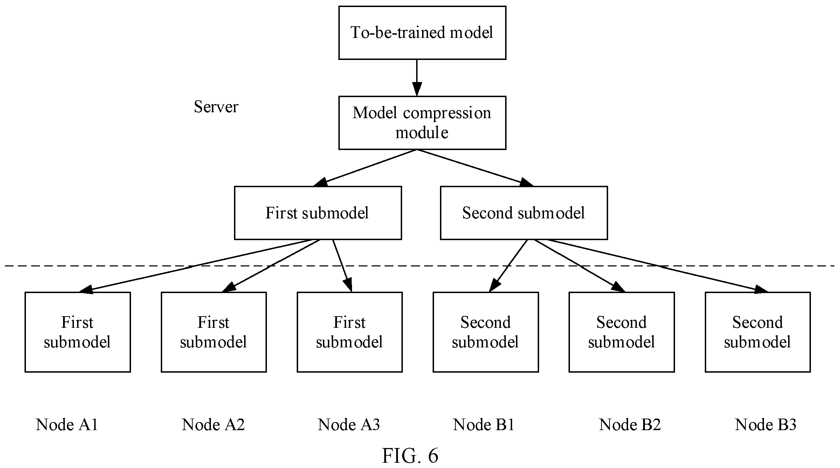

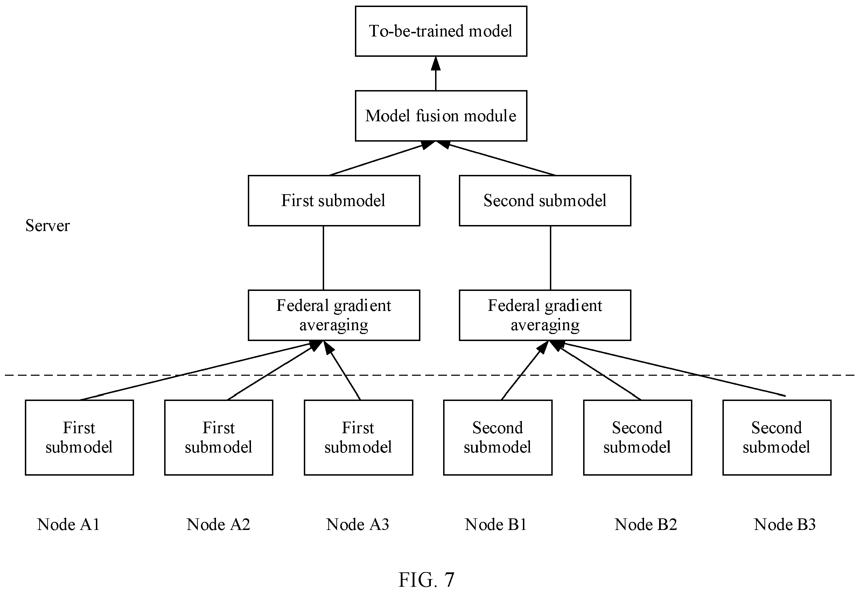

In this embodiment of this application, the server may separately summarize, by group, a gradient uploaded by each type of terminal device, and update a corresponding small model according to a federated gradient averaging algorithm. FIG. 6 and FIG. 7 are examples of a model training method according to an embodiment of this application. A model compression module of a server may compress a to-be-trained model into a first submodel and a second submodel. Then, the server may deliver the first submodel to a node A1, a node A2, and a node A3, and deliver the second submodel to a node B1, a node B2, and a node B3.

Then, the server updates, according to a federated gradient averaging algorithm, a parameter of the first submodel based on gradients uploaded by the node A1, the node A2, and the node A3, and updates, according to the federated gradient averaging algorithm, a parameter of the second submodel based on gradients uploaded by the node B1, the node B2, and the node B3. In addition, the server fuses and updates a large model of a central node in a multi-model fusion manner based on various types of small models. For example, the first submodel and the second submodel are fused into the to-be-trained model. A fusion manner may be multi-teacher distillation.

For example, the server may summarize a plurality of updated compression models {TinyBERT_update}, and perform multi-teacher distillation by using {TinyBERT_update} as a plurality of teacher models, to obtain a student model BERT _update. Data on a user side cannot be used during distillation. Therefore, a data-free distillation manner (Datafree Distillation) is used, synthetic data is used for distillation, or general public data is used for distillation.

An embodiment of this application provides a model training method. The method includes: sending a first submodel to a first device, where the first submodel is obtained by compressing a to-be-trained model; receiving a first gradient sent by the first device, where the first gradient is obtained when the first device trains the first submodel; and performing model training on the to-be-trained model based on at least the first gradient, to obtain an updated to-be-trained model. According to the method, a server compresses the to-be-trained model and delivers the to-be-trained model to a terminal device, so that the terminal device does not need to train a large model with a same scale as that of the server.

In this embodiment of this application, the server may further send a second submodel to a second device, where the second submodel is obtained by compressing the to-be-trained model, and the second submodel is different from the first submodel; receive a second gradient sent by the second device, where the second gradient is obtained when the second device trains the second submodel; and perform model training on the to-be-trained model based on the first gradient and the second gradient, to obtain the updated to-be-trained model. In the foregoing manner, the server may select different models for different terminal devices and deliver the model to the terminal device.

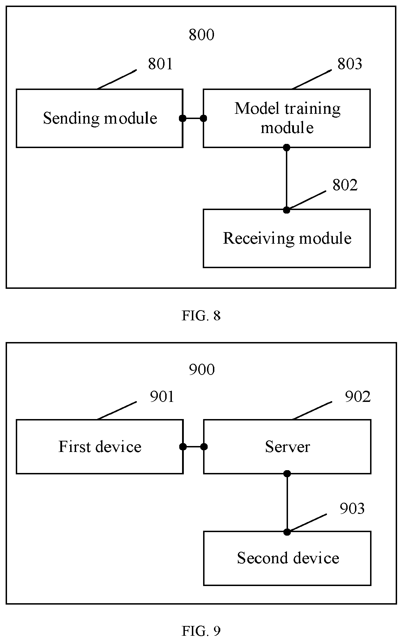

The following describes a data processing apparatus provided in embodiments of this application from a perspective of an apparatus. FIG. 8 is a schematic diagram of a data processing apparatus according to an embodiment of this application. As shown in FIG. 8, a data processing apparatus 800 provided in this embodiment of this application includes:

a sending module 801, configured to send a first submodel to a first device, where the first submodel is obtained by compressing a to-be-trained model;
a receiving module 802, configured to receive a first gradient sent by the first device, where the first gradient is obtained when the first device trains the first submodel; and
a model training module 803, configured to perform model training on the to-be-trained model based on at least the first gradient, to obtain an updated to-be-trained model.

In a possible implementation, a storage resource for storing the first submodel is less than a storage resource for storing the to-be-trained model.

In a possible implementation, a computing resource for running the first submodel is less than a computing resource for running the to-be-trained model.

In a possible implementation, the computing resource includes at least one of the following: a memory resource, a video random access memory resource, or a CPU resource.

In a possible implementation, the first submodel is obtained by performing at least one of the following processing manners on the to-be-trained model: pruning, knowledge distillation, or quantization.

In a possible implementation, the model training module is configured to: train the first submodel based on the first gradient, to obtain an updated first submodel; and perform knowledge distillation on the to-be-trained model by using at least the updated first submodel as a teacher model and the to-be-trained model as a student model, to obtain the updated to-be-trained model.

In a possible implementation, the apparatus further includes:
an obtaining module, configured to: obtain a data processing capability of the first device, where the data processing capability includes at least one of the following: an available storage resource or an available computing resource; and obtain, based on a first mapping relationship, the first submodel corresponding to the first device, where the first mapping relationship includes a correspondence between a data processing capability and a submodel, and in the first mapping relationship, the data processing capability of the first device corresponds to the first submodel.

In a possible implementation, the sending module is configured to send a second submodel to a second device, where the second submodel is obtained by compressing the to-be-trained model, and the second submodel is different from the first submodel.

The receiving module is configured to receive a second gradient sent by the second device, where the second gradient is obtained when the second device trains the second submodel.

The model training module is configured to perform model training on the to-be-trained model based on the first gradient and the second gradient, to obtain the updated to-be-trained model.

In a possible implementation, the data processing capability of the first device is different from a data processing capability of the second device, and the data processing capability includes at least one of the following: an available storage resource or an available computing resource.

In a possible implementation, the storage resource for storing the first submodel is different from a storage resource for storing the second submodel.

In a possible implementation, the computing resource for running the first submodel is different from a computing resource for running the second submodel.

In a possible implementation, the second submodel is obtained by performing at least one of the following processing manners on the to-be-trained model: pruning, knowledge distillation, or quantization.

In a possible implementation, the model training module is configured to: train the first submodel based on the first gradient, to obtain the updated first submodel; train the second submodel based on the second gradient, to obtain an updated second submodel; and perform knowledge distillation on the to-be-trained model by using the updated first submodel and the updated second submodel as teacher models and the to-be-trained model as a student model, to obtain the updated to-be-trained model.

FIG. 9 is a schematic diagram of a system according to an embodiment of this application. As shown in FIG. 9, a system 900 provided in this embodiment of this application includes:

a first device 901 and a server 902, where the server 902 is configured to send a first submodel to the first device 901, and the first submodel is obtained by compressing a to-be-trained model.

The first device 901 is configured to: train the first submodel, to obtain a first gradient; and send the first gradient to the server 902.

The server 902 is configured to perform model training on the to-be-trained model based on at least the first gradient, to obtain an updated to-be-trained model.

In a possible implementation, a storage resource for storing the first submodel is less than a storage resource for storing the to-be-trained model.

In a possible implementation, a computing resource for running the first submodel is less than a computing resource for running the to-be-trained model.

In a possible implementation, the computing resource includes at least one of the following: a memory resource, a video random access memory resource, or a CPU resource.

In a possible implementation, the first submodel is obtained by performing at least one of the following processing manners on the to-be-trained model: pruning, knowledge distillation, or quantization.

In a possible implementation, the server 902 is configured to: train the first submodel based on the first gradient, to obtain the updated first submodel; and

perform knowledge distillation on the to-be-trained model by using at least the updated first submodel as a teacher model and the to-be-trained model as a student model, to obtain the updated to-be-trained model.

In a possible implementation, the server 902 is configured to: obtain a data processing capability of the first device 901, where the data processing capability includes at least one of the following: an available storage resource or an available computing resource; and

obtain, based on a first mapping relationship, the first submodel corresponding to the first device 901, where the first mapping relationship includes a correspondence between a data processing capability and a submodel, and in the first mapping relationship, the data processing capability of the first device 901 corresponds to the first submodel.

In a possible implementation, the system further includes a second device 903. The server 902 is configured to send a second submodel to the second device 903, where the second submodel is obtained by compressing the to-be-trained model, and the second submodel is different from the first submodel.

The second device 903 is configured to: train the second submodel to obtain a second gradient; and send the second gradient to the server 902.

That the server 902 is configured to perform model training on the to-be-trained model based on at least the first gradient includes:

performing model training on the to-be-trained model based on the first gradient and the second gradient, to obtain the updated to-be-trained model.

In a possible implementation, the data processing capability of the first device 901 is different from a data processing capability of the second device 903, and the data processing capability includes at least one of the following: an available storage resource or an available computing resource.

In a possible implementation, the storage resource for storing the first submodel is different from a storage resource for storing the second submodel.

In a possible implementation, the computing resource for running the first submodel is different from a computing resource for running the second submodel.

In a possible implementation, the second submodel is obtained by performing at least one of the following processing manners on the to-be-trained model: pruning, knowledge distillation, or quantization.

In a possible implementation, the server 902 is configured to: train the first submodel based on the first gradient, to obtain the updated first submodel;

train the second submodel based on the second gradient, to obtain an updated second submodel; and

perform knowledge distillation on the to-be-trained model by using the updated first submodel and the updated second submodel as teacher models and the to-be-trained model as a student model, to obtain the updated to-be-trained model.

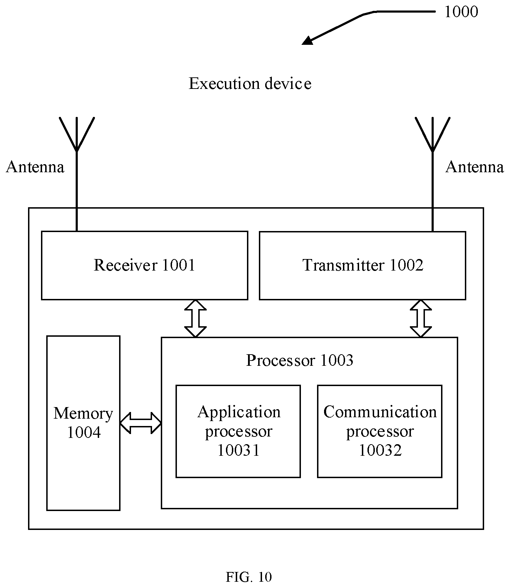

The following describes an execution device provided in an embodiment of this application. FIG. 10 is a schematic diagram of a structure of an execution device according to an embodiment of this application. An execution device 1000 may specifically be represented as a mobile phone, a tablet, a notebook computer, an intelligent wearable device, a server, or the like. This is not limited herein. The data processing apparatus described in the embodiment corresponding to FIG. 10 may be deployed on the execution device 1000, and is configured to implement a data processing function in the embodiment corresponding to FIG. 10. Specifically, the execution device 1000 includes: a receiver 1001, a transmitter 1002, a processor 1003, and a memory 1004 (there may be one or more processors 1003 in the execution device 1000, and one processor is used as an example in FIG. 10). The processor 1003 may include an application processor 10031 and a communication processor 10032. In some embodiments of this application, the receiver 1001, the transmitter 1002, the processor 1003, and the memory 1004 may be connected by using a bus or in another manner.

The memory 1004 may include a read-only memory and a random access memory, and provide instructions and data for the processor 1003. A part of the memory 1004 may further include a nonvolatile random access memory (nonvolatile random access memory, NVRAM). The memory 1004 stores a processor and operation instructions, an executable module or a data structure, a subnet thereof, or an extended set thereof. The operation instructions may include various operation instructions to implement various operations.

The processor 1003 controls an operation of the execution device. During specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in embodiments of this application may be applied to the processor 1003, or may be implemented by the processor 1003. The processor 1003 may be an integrated circuit chip, and have a signal processing capability. In an implementation process, steps in the methods can be implemented by using a hardware integrated logical circuit in the processor 1003, or by using instructions in a form of software. The processor 1003 may be a general-purpose processor, a digital signal processor (digital signal processor, DSP), a microprocessor, or a microcontroller. The processor 1003 may further include an application-specific integrated circuit (application-specific integrated circuit, ASIC), a field programmable gate array (field programmable gate array, FPGA) or another programmable logic device, a discrete gate, or a transistor logic device, or a discrete hardware component. The processor 1003 may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory 1004, and the processor 1003 reads information in the memory 1004 and completes the steps in the foregoing methods in combination with hardware of the processor 1003.

The receiver 1001 may be configured to receive input digital or character information, and generate a signal input related to setting and function control of the execution device. The transmitter 1002 may be configured to output digital or character information by using a first interface. The transmitter 1002 may further be configured to send instructions to a disk group by using the first interface, to modify data in the disk group. The transmitter 1002 may further include a display device such as a display screen.

In this embodiment of this application, in one case, the processor 1003 is configured to perform the method performed by the execution device in the embodiment corresponding to FIG. 5.

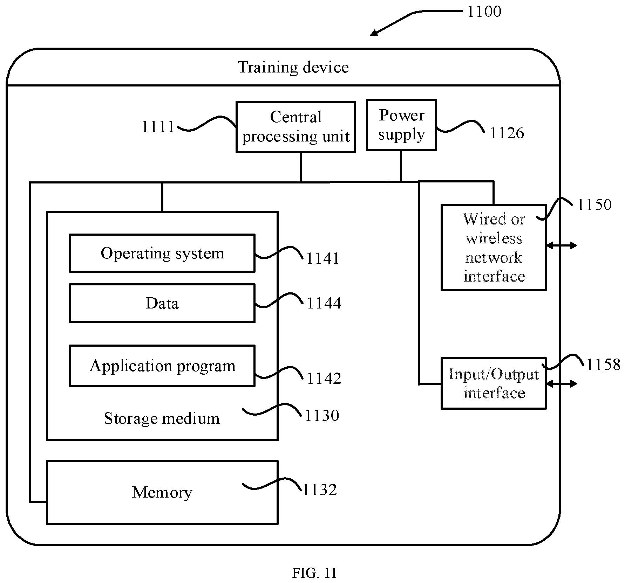

An embodiment of this application further provides a training device. FIG. 11 is a schematic diagram of a structure of a training device according to an embodiment of this application. The neural network training apparatus described in the embodiment corresponding to FIG. 10 may be deployed on a training device 1100, and is configured to implement a function of the neural network training apparatus in the embodiment corresponding to FIG. 10. Specifically, the training device 1100 is implemented by one or more servers. The training device 1100 may vary greatly with configuration or performance, and may include one or more central processing units (central processing unit, CPU) 1111 (for example, one or more processors), a memory 1132, and one or more storage media 1130 (for example, one or more mass storage devices) that store an application program 1142 or data 1144. The memory 1132 and the storage medium 1130 may perform transitory storage or persistent storage. The program stored in the storage medium 1130 may include one or more modules (not shown in the figure), and each module may include a series of instruction operations for the training device. Further, the central processing unit 1111 may be configured to communicate with the storage medium 1130, and perform the series of instruction operations in the storage medium 1130 on the training device 1100.

The training device 1100 may further include one or more power supplies 1126, one or more wired or wireless network interfaces 1150, one or more input/output interfaces 1158, or one or more operating systems 1141, for example, Windows Server™, Mac OS X™, Unix™, Linux™, and FreeBSD™.

In this embodiment of this application, the central processing unit 1111 is configured to perform steps related to the training method in the foregoing embodiments.

An embodiment of this application further provides a computer program product. When the computer program product runs on a computer, the computer is enabled to perform steps performed by the execution device or steps performed by the training device.

An embodiment of this application further provides a computer-readable storage medium. The computer-readable storage medium stores a program used for signal processing. When the program is run on a computer, the computer is enabled to perform steps performed by the execution device or steps performed by the training device.

The execution device, the training device, or the terminal device in embodiments of this application may specifically be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing method described in the embodiments, or a chip in the training device performs the data processing method described in the embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

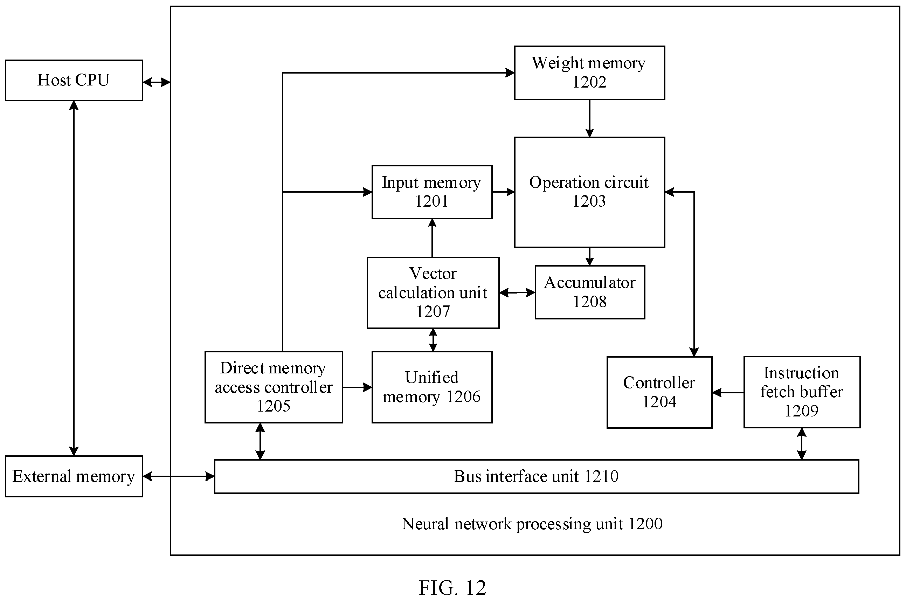

Specifically, FIG. 12 is a schematic diagram of a structure of a chip according to an embodiment of this application. The chip may be represented as a neural network processing unit NPU 1200. The NPU 1200 is mounted to a host CPU (Host CPU) as a coprocessor, and the host CPU allocates a task. A core part of the NPU is an operation circuit 1203, and a controller 1204 controls the operation circuit 1203 to extract matrix data in a memory and perform a multiplication operation.

In some implementations, the operation circuit 1203 includes a plurality of processing engines (process engine, PE) inside. In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general-purpose matrix processor.

For example, it is assumed that there are an input matrix A, a weight matrix B, and an output matrix C. The operation circuit fetches, from a weight memory 1202, data corresponding to the matrix B, and caches the data on each PE in the operation circuit. The operation circuit fetches data of the matrix A from an input memory 1201, to perform a matrix operation on the matrix B, and stores an obtained partial result or an obtained final result of the matrix in an accumulator (accumulator) 1208.

A unified memory 1206 is configured to store input data and output data. The weight data is directly transferred to the weight memory 1202 by using a direct memory access controller (direct memory access controller, DMAC) 1205. The input data is also transferred to the unified memory 1206 by using the DMAC.

A BIU is a bus interface unit, namely, a bus interface unit 1210, and is configured to perform interaction between an AXI bus, and the DMAC and an instruction fetch buffer (Instruction Fetch Buffer, IFB) 1209.

The bus interface unit (bus interface unit, BIU) 1210 is used by the instruction fetch buffer 1209 to obtain instructions from an external memory, and is further used by the direct memory access controller 1205 to obtain original data of the input matrix A or the weight matrix B from the external memory.

The DMAC is mainly configured to transfer input data in the external memory DDR to the unified memory 1206, or transfer the weight data to the weight memory 1202, or transfer the input data to the input memory 1201.

A vector calculation unit 1207 includes a plurality of operation processing units. If required, further processing is performed on an output of the operation circuit 1203, for example, vector multiplication, vector addition, an exponential operation, a logarithmic operation, or size comparison. The vector calculation unit 1207 is mainly configured to perform network calculation at a non-convolutional/fully connected layer in a neural network, for example, batch normalization (batch normalization), pixel-level summation, and upsampling on a feature plane.

In some implementations, the vector calculation unit 1207 can store a processed output vector in a unified memory 1206. For example, the vector calculation unit 1207 may apply a linear function or a nonlinear function to the output of the operation circuit 1203, for example, perform linear interpolation on a feature plane extracted at a convolutional layer. For another example, the linear function or the nonlinear function is applied to a vector of an accumulated value to generate an activation value. In some implementations, the vector calculation unit 1207 generates a normalized value, a pixel-level summation value, or both. In some implementations, the processed output vector can be used as an activated input to the operation circuit 1203, for example, the processed output vector can be used at a subsequent layer of the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private for the NPU hardware architecture.

The processor mentioned above may be a general-purpose central processing unit, a microprocessor, an ASIC, or one or more integrated circuits for controlling program execution.

In addition, it should be noted that the apparatus embodiments described above are merely an example. The units described as separate parts may or may not be physically separate, and parts displayed as units may or may not be physical units, may be located in one position, or may be distributed on a plurality of network units. Some or all the modules may be selected based on an actual requirement to achieve objectives of the solutions of the embodiments. In addition, in the accompanying drawings of the apparatus embodiments provided in this application, connection relationships between modules indicate that the modules have communication connections with each other, which may specifically be implemented as one or more communication buses or signal cables.

Based on the descriptions of the foregoing implementations, a person skilled in the art may clearly understand that this application may be implemented by software in addition to necessary universal hardware, or certainly may be implemented by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, for this application, software program implementation is a better implementation in more cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the embodiments may be implemented by using software, hardware, firmware, or any combination thereof. When the software is used to implement the embodiments, all or some of the embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

**Claims**

1. A model training method, wherein the method comprises:

   sending a first submodel to a first device, wherein the first submodel is obtained by compressing a to-be-trained model;
   receiving a first gradient sent by the first device, wherein the first gradient is obtained when the first device trains the first submodel; and
   performing model training on the to-be-trained model based on at least the first gradient, to obtain an updated to-be-trained model.

2. The method according to claim 1, wherein a storage resource for storing the first submodel is less than a storage resource for storing the to-be-trained model.

3. The method according to claim 1 or 2, wherein a computing resource for running the first submodel is less than a computing resource for running the to-be-trained model.

4. The method according to claim 3, wherein the computing resource comprises at least one of the following: a memory resource, a video random access memory resource, or a CPU resource.

5. The method according to any one of claims 1 to 4, wherein the first submodel is obtained by performing at least one of the following processing manners on the to-be-trained model: pruning, knowledge distillation, or quantization.

6. The method according to any one of claims 1 to 5, wherein the performing model training on the to-be-trained model based on at least the first gradient comprises:

   training the first submodel based on the first gradient, to obtain an updated first submodel; and
   performing knowledge distillation on the to-be-trained model by using at least the updated first submodel as a teacher model and the to-be-trained model as a student model, to obtain the updated to-be-trained model.

7. The method according to any one of claims 1 to 6, wherein the method further comprises:

   obtaining a data processing capability of the first device, wherein the data processing capability comprises at least one of the following: an available storage resource or an available computing resource; and
   obtaining, based on a first mapping relationship, the first submodel corresponding to the first device, wherein the first mapping relationship comprises a correspondence between a data processing capability and a submodel, and in the first mapping relationship, the data processing capability of the first device corresponds to the first submodel.

8. The method according to any one of claims 1 to 7, wherein the method further comprises:

   sending a second submodel to a second device, wherein the second submodel is obtained by compressing the to-be-trained model, and the second submodel is different from the first submodel; and
   receiving a second gradient sent by the second device, wherein the second gradient is obtained when the second device trains the second submodel; and
   the performing model training on the to-be-trained model based on at least the first gradient comprises:
   performing model training on the to-be-trained model based on the first gradient and the second gradient, to obtain the updated to-be-trained model.

9. The method according to claim 8, wherein the data processing capability of the first device is different from a data processing capability of the second device, and the data processing capability comprises at least one of the following: an available storage resource or an available computing resource.

10. The method according to claim 8 or 9, wherein the storage resource for storing the first submodel is different from a storage resource for storing the second submodel.

11. The method according to any one of claims 8 to 10, wherein the computing resource for running the first submodel is different from a computing resource for running the second submodel.

12. The method according to any one of claims 8 to 11, wherein the second submodel is obtained by performing at least one of the following processing manners on the to-be-trained model: pruning, knowledge distillation, or quantization.

13. The method according to any one of claims 8 to 12, wherein the performing model training on the to-be-trained model based on the first gradient and the second gradient comprises:

   training the first submodel based on the first gradient, to obtain the updated first submodel;
   training the second submodel based on the second gradient, to obtain an updated second submodel; and
   performing knowledge distillation on the to-be-trained model by using the updated first submodel and the updated second submodel as teacher models and the to-be-trained model as a student model, to obtain the updated to-be-trained model.

14. A model training apparatus, wherein the apparatus comprises:

   a sending module, configured to send a first submodel to a first device, wherein the first submodel is obtained by compressing a to-be-trained model;
   a receiving module, configured to receive a first gradient sent by the first device, wherein the first gradient is obtained when the first device trains the first submodel; and
   a model training module, configured to perform model training on the to-be-trained model based on at least the first gradient, to obtain an updated to-be-trained model.

15. The apparatus according to claim 14, wherein a storage resource for storing the first submodel is less than a storage resource for storing the to-be-trained model.

16. The apparatus according to claim 14 or 15, wherein a computing resource for running the first submodel is less than a computing resource for running the to-be-trained model.

17. The apparatus according to claim 16, wherein the computing resource comprises at least one of the following: a memory resource, a video random access memory resource, or a CPU resource.

18. The apparatus according to any one of claims 14 to 17, wherein the first submodel is obtained by performing at least one of the following processing manners on the to-be-trained model: pruning, knowledge distillation, or quantization.

19. The apparatus according to any one of claims 14 to 18, wherein the model training module is configured to: train the first submodel based on the first gradient, to obtain an updated first submodel; and perform knowledge distillation on the to-be-trained model by using at least the updated first submodel as a teacher model and the to-be-trained model as a student model, to obtain the updated to-be-trained model.

20. The apparatus according to any one of claims 14 to 19, wherein the apparatus further comprises:
an obtaining module, configured to: obtain a data processing capability of the first device, wherein the data processing capability comprises at least one of the following: an available storage resource or an available computing resource; and obtain, based on a first mapping relationship, the first submodel corresponding to the first device, wherein the first mapping relationship comprises a correspondence between a data processing capability and a submodel, and in the first mapping relationship, the data processing capability of the first device corresponds to the first submodel.

21. The apparatus according to any one of claims 14 to 20, wherein the sending module is configured to send a second submodel to a second device, wherein the second submodel is obtained by compressing the to-be-trained model, and the second submodel is different from the first submodel;

the receiving module is configured to receive a second gradient sent by the second device, wherein the second gradient is obtained when the second device trains the second submodel; and
the model training module is configured to perform model training on the to-be-trained model based on the first gradient and the second gradient, to obtain the updated to-be-trained model.

22. The apparatus according to claim 21, wherein the data processing capability of the first device is different from a data processing capability of the second device, and the data processing capability comprises at least one of the following: an available storage resource or an available computing resource.

23. The apparatus according to claim 21 or 22, wherein the storage resource for storing the first submodel is different from a storage resource for storing the second submodel.

24. The apparatus according to any one of claims 21 to 23, wherein the computing resource for running the first submodel is different from a computing resource for running the second submodel.

25. The apparatus according to any one of claims 21 to 24, wherein the second submodel is obtained by performing at least one of the following processing manners on the to-be-trained model: pruning, knowledge distillation, or quantization.

26. The apparatus according to any one of claims 21 to 25, wherein the model training module is configured to: train the first submodel based on the first gradient, to obtain the updated first submodel; train the second submodel based on the second gradient, to obtain an updated second submodel; and perform knowledge distillation on the to-be-trained model by using the updated first submodel and the updated second submodel as teacher models and the to-be-trained model as a student model, to obtain the updated to-be-trained model.

27. A model training apparatus, wherein the apparatus comprises a memory and a processor, the memory stores code, and the processor is configured to execute the code, to implement the method according to any one of claims 1 to 13.

28. A computer storage medium, wherein the computer storage medium stores one or more instructions, and when the instructions are executed by one or more computers, the one or more computers are enabled to perform the method according to any one of claims 1 to 13.

Intelligent information chain

Smart product and industry application

Translation/Text analysis/...     Speech/Vision/Image/...

Data

Data processing:

Data training/Machine learning/ Deep learning

Searching/ Inference/ Decision-making   ...

Infrastructure    Sensor    Smart chip    Basic platform    ...

IT value chain

FIG. 1

EP 4 181 020 A1

Terminal device 102

Processor 112

Memory 114

Data 116

Model 120

Instructions 118

Input component 122

Communication interface 123

Server 130

Processor 132

Memory 134

Data 136

Model 140

Instructions 138

Communication interface 133

FIG. 2

EP 4 181 020 A1

FIG. 3

Distribution node at a terminal side

Central node at a cloud side

A1

User 1

B1

A2

User 2

B2

User 3

Small model
management node A

Small model
management node B

Model compression
fusion node

Large model
management node

FIG. 4

```
┌─────────────────────────────────────────────────┐
│                                                  │      501
│        Send a first submodel to a first device   │ ╱
│                                                  │
└─────────────────────────────────────────────────┘
                        │
                        ▼
┌─────────────────────────────────────────────────┐
│                                                  │      502
│      Receive a first gradient sent by the first device │ ╱
│                                                  │
└─────────────────────────────────────────────────┘
                        │
                        ▼
┌─────────────────────────────────────────────────┐
│   Perform model training on a to-be-trained model │      503
│   based on at least the first gradient, to obtain an │ ╱
│            updated to-be-trained model           │
└─────────────────────────────────────────────────┘
```

FIG. 5

Server

```
                        ┌─────────────────────┐
                        │  To-be-trained model │
                        └──────────┬──────────┘
                                   │
                                   ▼
                        ┌─────────────────────┐
                        │  Model compression   │
                        │       module         │
                        └──────────┬──────────┘
                          ╱                  ╲
                         ▼                    ▼
          ┌──────────────────┐      ┌──────────────────┐
          │  First submodel  │      │  Second submodel │
          └──────────────────┘      └──────────────────┘
```

| First submodel | First submodel | First submodel | Second submodel | Second submodel | Second submodel |

Node A1          Node A2          Node A3          Node B1          Node B2          Node B3

FIG. 6

FIG. 7

EP 4 181 020 A1

800

801

Sending module

803

Model training module

802

Receiving module

FIG. 8

900

901

First device

902

Server

903

Second device

FIG. 9

1000

Execution device

Antenna                                                          Antenna

| Receiver 1001 | Transmitter 1002 |

Processor 1003

| Memory 1004 | Application processor 10031 | Communication processor 10032 |

FIG. 10

FIG. 11

Host CPU

Weight memory 1202

Input memory 1201

Operation circuit 1203

Vector calculation unit 1207

Accumulator 1208

Direct memory access controller 1205

Unified memory 1206

Controller 1204

Instruction fetch buffer 1209

External memory

Bus interface unit 1210

Neural network processing unit 1200

FIG. 12

## INTERNATIONAL SEARCH REPORT

| International application No. |
| --- |
| **PCT/CN2021/105962** |

**A. CLASSIFICATION OF SUBJECT MATTER**

G06N 3/04(2006.01)i; G06N 3/08(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, WPI, EPODOC, CNKI: 模型, 训练, 压缩, 蒸馏, 剪枝, 量化, 梯度, 资源, 计算, 存储, model, train, compress, gradient, resource, distil, prune, quantize, quantify, calculation, storage

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112070207 A (HUAWEI TECHNOLOGIES CO., LTD.) 11 December 2020 (2020-12-11) claims 1-28 | 1-28 |
| X | CN 110196735 A (SHANGHAI CAMBRICON INFORMATION TECHNOLOGY CO., LTD.) 03 September 2019 (2019-09-03) description paragraphs [0019], [0037]-[0097], [0160]-[0164] | 1-28 |
| A | CN 111401552 A (ZHEJIANG UNIVERSITY) 10 July 2020 (2020-07-10) entire document | 1-28 |
| A | CN 111382863 A (SHANGHAI O-FILM INTELLIGENT VEHICLE ASSOCIATION TECHNOLOGY CO., LTD.) 07 July 2020 (2020-07-07) entire document | 1-28 |
| A | US 10152676 B1 (AMAZON TECHNOLOGIES, INC.) 11 December 2018 (2018-12-11) entire document | 1-28 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 September 2021** | **13 October 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

| International application No. |
| --- |
| **PCT/CN2021/105962** |

| Patent document cited in search report | | | Publication date (day/month/year) | Patent family member(s) | Publication date (day/month/year) |
| --- | --- | --- | --- | --- | --- |
| CN | 112070207 | A | 11 December 2020 | None | |
| CN | 110196735 | A | 03 September 2019 | None | |
| CN | 111401552 | A | 10 July 2020 | None | |
| CN | 111382863 | A | 07 July 2020 | None | |
| US | 10152676 | B1 | 11 December 2018 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010762709